# EUROPÄISCHE PATENTANMELDUNG

(11) **EP 3 165 099 A1**
(43) Veröffentlichungstag der Anmeldung: **10.05.2017**
(21) Anmeldenummer: 15192681.3
(22) Anmeldetag: 03.11.2015
(51) Int. Cl.: A23L 5/20, A23L 11/30

(54) **ENTÖLUNG UND GLEICHZEITIGE ENTFERNUNG VON UNERWÜNSCHTEN BEGLEITSTOFFEN AUS BOHNEN MIT ÜBERKRITISCHEM CO2**

(71) Anmelder: Evonik Degussa GmbH, 45128 Essen (DE)
(72) Erfinder: Wiesmueller, Johann, 84518 Garching (DE); Michlbauer, Franz, 84558 Kirchweidach (DE); Band, Rainer, 81737 München (DE); Hausner, Helmut, 83308 Trostberg (DE)

(57) **Zusammenfassung**

Die Erfindung betrifft ein schonendes Verfahren zur Extraktion von Hülsenfrüchten mit überkritischem CO₂. Es eignet sich speziell zur Verarbeitung der Sojabohne zu den verschiedensten Produkten (entfettete Sojaflocken, Sojamehl, Sojakonzentrat, Sojamilch). Daneben kann dieses Verfahren auch zur Entfernung von anderen unerwünschten Geschmacks - Begleitstoffen von Hülsenfrüchten z. B. Bohnen und Erbsen, eingesetzt werden. Diese mit dem Verfahren extrahierten Produkte können in der Lebensmittelindustrie u. a. als neutrale Füllstoffe eingesetzt werden.

## Beschreibung

Die Erfindung betrifft ein schonendes Verfahren zur Extraktion von Bohnen mit überkritischem CO₂. Es eignet sich speziell zur Verarbeitung der Sojabohne zu den verschiedensten Produkten (entfettete Sojaflocken, Sojamehl, Sojakonzentrat, Sojamilch). Daneben kann dieses Verfahren auch zur Entfernung von anderen unerwünschten Geschmacks eingesetzt werden. Diese mit dem Verfahren extrahierten Produkte können in der Lebensmittelindustrie unter anderem als neutrale Füllstoffe eingesetzt werden.

### Hintergrund der Erfindung

Bei der Verarbeitung von Bohnen wie zum Beispiel der Sojabohne tritt immer wieder deren unangenehme "bohnenartige" Eigengeschmack in den Vordergrund. Deshalb ist es notwendig, vor der lebensmitteltechnischen Verarbeitung von Bohnen (siehe zum Beispiel DE 10 2008 064423 A1) diese von unerwünschten Inhaltsstoffen zu befreien.

Im Stand der Technik sind dazu viele Verfahren genannt.

Eine Möglichkeit, dem Verbraucher Produkte aus Hülsenfrüchten wie zum Beispiel Soja schmackhaft zu machen, ist die Kaschierung des Geschmacks durch Zugabe von Zucker, Salz und/oder Aromastoffen. Gerade für hochwertige Lebensmittel und zur Vermeidung des ernährungsphysiologisch bedenklichen übermäßigen Zucker- und Salzkonsums ist dieser Weg jedoch unerwünscht. Außerdem verbleibt auch bei dieser Methode immer ein unangenehmer Rest im Produkt, da die vollständige Kaschierung der unerwünschten Geschmacksstoffe nicht gelingt.

Im Stand der Technik sind als Alternative dazu viele Verfahren zur Entölung oder Entfernung unerwünschter Begleitstoffe mit organischen Extraktionsmitteln beschrieben.
Eine Gruppe dieser Verfahren beruht auf der Extraktion mit Hexan oder mit überkritischem oder flüssigem CO₂ (diskutiert von E. Reverchon & L. Sesti Osseo, Journal of the American Oil Chemists' Society 1994, Vol. 71, No. 9, 1007 - 1012).

Auch beschreibt die DE 3542932 A1 ein Verfahren zur Entölung von Sojabohnen mit flüssigem CO₂ ohne Zusatz eines Kosolvens, während die EP 0 721 980 A2 ein ähnliches Verfahren, in welchem dem CO₂ ein Kosolvens zugegeben wird, beschreibt.
Obwohl diese Verfahren eine Verbesserung der Extraktion unerwünschter Begleitstoffe in Hülsenfrüchten ermöglichen, gelingt diese jedoch dennoch auch mit diesen Verfahren nicht vollständig und nur unter großem technischen Aufwand.

Die Aufgabe der vorliegenden Erfindung war es deshalb, ein Verfahren zur Verfügung zu stellen, mit welchem eine verbesserte Extraktion von Bohnen und insbesondere Sojabohnen gelingt.

### Detaillierte Beschreibung der Erfindung

Es wurde nun überraschend ein Verfahren gefunden, mit welchem eine besonders effiziente Extraktion von Bohnen, insbesondere Sojabohnen, möglich ist.

Das erfindungsgemäße Verfahren ist demnach eines zur Extraktion von Bohnen mit überkritischem CO₂, welches dadurch gekennzeichnet ist, dass
(a) unzerkleinerte Bohnen mit einem Wassergehalt von unter 15.0 Gew.-% so lange mit Wasserdampf behandelt werden, bis deren Wassergehalt in einem Bereich zwischen 15.0 und 17.5 Gew.-% liegt;
(b) die in Schritt (a) behandelten Bohnen zerkleinert werden;
(c) die in Schritt (b) zerkleinerten Bohnen mit überkritischem CO₂ extrahiert werden.

Im Schritt (a) des erfindungsgemäßen Verfahrens werden unzerkleinerte Hülsenfrüchte eingesetzt.

"Bohnen" bezeichnet im Sinne der Erfindung die runden, teils länglichen oder nierenförmigen Samen der solche Samen bildenden Pflanze aus der Familie der Hülsenfrüchtler (Fabaceae oder *Leguminosae).* Insbesondere sind darunter die Samen der Pflanzen aus der Unterfamilie der Schmetterlingsblütler *(Fabodieae)* zu verstehen. Bevorzugt sind die Bohnen ausgewählt aus der Gruppe bestehend aus Erbse, Linse, Ackerbohne, Wolfsbohne, Sojabohne, ganz besonders bevorzugt Sojabohnen.

Im ersten Schritt des erfindungsgemäßen Verfahrens werden die Sojabohnen mit Wasserdampf behandelt. Dies kann in einem dem Fachmann geläufigen Vorrichtung geschehen. Eine solche ist zum Beispiel in Form einer ummantelten Förderschneckenpresse dem Fachmann bekannt, wie sie etwa in der DE 689 23 481 T2 beschrieben ist.
Der dabei verwendete Wasserdampf hat dabei eine Temperatur von über 100 °C und insbesondere unter 150 °C, bevorzugt 115 °C.

Im ersten Schritt des erfindungsgemäßen Verfahrens werden dabei Bohnen eingesetzt, deren Wassergehalt unterhalb von 15.0 Gew.-%, bevorzugt unterhalb von 14.0 Gew.-%, noch bevorzugter unterhalb von 10.0 Gew.-%, liegt. Dies kann je nach eingesetzter Bohnenart schon der in frischen, unbehandelten Bohnen befindliche Wassergehalt sein. Insbesondere kann es aber nötig sein, die Bohnen in getrocknetem Zustand einzusetzen, da dann der Wassergehalt der Bohnen unterhalb des Wertes von 15.0 Gew.-% liegt. Getrocknete Sojabohnen weisen beispielsweise einen Wassergehalt von unter 10 Gew.-% auf.

Die in der vorliegenden Erfindung genannten Wassergehalte werden mit der Methode Ac 2-41 der American Oil Chemists' Society bestimmt ("Method Ac 2-41, Official Methods of the American Oil Chemists' Society, AOCS, Champaign, IL"), wobei sich die erfindungsgemäß verwendete Einheit "Gew.-%" dabei auf den mit dieser Methode bestimmten Wassergehalt G_{W}/G_{T+W} bezieht, wobei Gw = Gesamtgewicht des mit der Methode Ac 2-41 bestimmten Wasser und G_{T+W} = Gesamtgewicht der Bohne inklusive Gw.

Es ist wesentlich für die Erfindung, dass die Behandlung mit Wasserdampf so lange durchgeführt wird, bis der Wassergehalt der Hülsenfrüchte im Bereich 15.0 Gew.-% bis 17.5 Gew.-% liegt. Der Wassergehalt der Sojabohnen vor und während der Bedampfung kann dabei kontinuierlich überprüft werden und dann beendet werden, wenn der gewünschte Wert innerhalb des Bereiches 15.0 bis 17.5 Gew.-% erreicht ist. Dies liegt im routinemäßigen Können des Fachmanns. Durch die Bedampfung mit Wasserdampf schwillen die eingesetzten Bohnen an, wodurch die darin enthaltenen Alkaloide und Öle besser mit CO₂ extrahiert werden können. Zusätzlich werden Enzymaktivitäten innerhalb der Sojabohne deaktiviert.

Im Schritt (b) des erfindungsgemäßen Verfahrens werden die in Schritt (a) behandelten Bohnen dann zerkleinert. Die Zerkleinerung kann dabei mit allen dem Fachmann geläufigen Mitteln erfolgen, zum Beispiel Mahlen in der Mühle oder Quetschen im Walzenstuhl (vergleiche auch die in der DE 689 23 481 T2 beschriebenen Methoden). Danach liegen die Bohnen als Partikel, insbesondere Flocken, vor.

Insbesondere weisen nach der Zerkleinerung im Schritt (b) mindestens 50 % der erhaltenen Partikel eine Dicke von ≤ 1 cm, bevorzugt von ≤ 0.6 cm, bevorzugter von unter ≤ 0.5 cm, noch bevorzugter von unter ≤ 0.3 cm auf. In einer weiteren noch bevorzugteren Ausführungsform weisen nach der Zerkleinerung im Schritt (b) mindestens 70 % der erhaltenen Partikel eine Dicke von ≤ 1 cm, bevorzugt von ≤ 0.6 cm, bevorzugter von unter ≤ 0.5 cm, noch bevorzugter von unter ≤ 0.3 cm auf. In einer weiteren noch bevorzugteren Ausführungsform weisen nach der Zerkleinerung im Schritt (b) mindestens 80 % der erhaltenen Partikel eine Dicke von ≤ 1 cm, bevorzugt von ≤ 0.6 cm, bevorzugter von unter ≤ 0.5 cm, noch bevorzugter von unter ≤ 0.3 cm auf. In einer weiteren noch bevorzugteren Ausführungsform weisen nach der Zerkleinerung im Schritt (b) mindestens 90 % der erhaltenen Partikel eine Dicke von ≤ 1 cm, bevorzugt von ≤ 0.6 cm, bevorzugter von unter ≤ 0.5 cm, noch bevorzugter von unter ≤ 0.3 cm auf. In einer weiteren noch bevorzugteren Ausführungsform weisen nach der Zerkleinerung im Schritt (b) mindestens 95 % der erhaltenen Partikel eine Dicke von ≤ 1 cm, bevorzugt von ≤ 0.6 cm, bevorzugter von unter ≤ 0.5 cm, noch bevorzugter von unter ≤ 0.3 cm auf. In einer weiteren noch bevorzugteren Ausführungsform weisen nach der Zerkleinerung im Schritt (b) mindestens 99 % der erhaltenen Partikel eine Dicke von ≤ 1 cm, bevorzugt von ≤ 0.6 cm, bevorzugter von unter ≤ 0.5 cm, noch bevorzugter von unter ≤ 0.3 cm auf.

In allen dieser Ausführungsformen weisen dabei insbesondere mindestens 50 %, bevorzugt mindestens 70 %, noch bevorzugter mindestens 80 %, noch mehr bevorzugter mindestens 90 %, besonders bevorzugt mindestens 95 %, am bevorzugtesten mindestens 99 % der erhaltenen Partikel eine Dicke von mindestens 0.1 cm, bevorzugt mindestens 0.2 cm auf.

Insbesondere weisen nach der Zerkleinerung im Schritt (b) mindestens 50 % der erhaltenen Partikel eine Länge von 0.5 mm bis 5 cm, bevorzugt 1 cm bis 4 cm, noch bevorzugter 1.5 cm bis 3 cm, noch mehr bevorzugter 2 cm bis 2.5 cm auf. Noch bevorzugter weisen nach der Zerkleinerung im Schritt (b) mindestens 70 % der erhaltenen Partikel eine Länge von 0.5 mm bis 5 cm, bevorzugt 1 cm bis 4 cm, noch bevorzugter 1.5 cm bis 3 cm, noch mehr bevorzugter 2 cm bis 2.5 cm auf. Noch bevorzugter weisen nach der Zerkleinerung im Schritt (b) mindestens 90 % der erhaltenen Partikel eine Länge von 0.5 mm bis 5 cm, bevorzugt 1 cm bis 4 cm, noch bevorzugter 1.5 cm bis 3 cm, noch mehr bevorzugter 2 cm bis 2.5 cm auf. Noch bevorzugter weisen nach der Zerkleinerung im Schritt (b) mindestens 95 % der erhaltenen Partikel eine Länge von 0.5 mm bis 5 cm, bevorzugt 1 cm bis 4 cm, noch bevorzugter 1.5 cm bis 3 cm, noch mehr bevorzugter 2 cm bis 2.5 cm auf. Noch bevorzugter weisen nach der Zerkleinerung im Schritt (b) mindestens 99 % der erhaltenen Partikel eine Länge von 0.5 mm bis 5 cm, bevorzugt 1 cm bis 4 cm, noch bevorzugter 1.5 cm bis 3 cm, noch mehr bevorzugter 2 cm bis 2.5 cm auf.

"Dicke" und "Länge" bedeutet dabei, dass das betreffende Partikel durch einen rechteckigen Schlitz, bei dem zwei gegenüberliegende parallele Seiten um den Betrag der jeweiligen Länge voneinander entfernt sind, und die beiden anderen gegenüberliegenden parallelen Seiten um den Betrag der jeweiligen Dicke voneinander entfernt sind, passen würde. Die Bestimmung der Partikelgröße erfolgt dabei beispielsweise mit der in der folgenden Veröffentlichung genannten Methode: M. Freitag, D. Döhne, J. Pfeiffer, G. Stalljohann, Ermittlung der Partikelgrößenverteilung in mehlförmigen Futtermitteln, Kongressband 124, 2012, VDLUFA-Kongress Passau, VDLUFA-Schriftenreihe 68, 745 - 752.

Im letzten Schritt des erfindungsgemäßen Verfahrens werden dann die im Schritt (b) zerkleinerten Bohnen mit überkritischem CO₂ extrahiert. Dazu weist das überkritische CO₂ insbesondere eine Temperatur im Bereich von 31 °C bis < 100 °C und einen Druck im Bereich von 74 bar bis 400 bar. Deshalb wird der Schritt (c) insbesondere bei einer Temperatur im Bereich 31 °C bis < 100 °C und einen Druck im Bereich von 74 bar bis 400 bar durchgeführt, bevorzugt bei einer Temperatur im Bereich 40 °C bis 90 °C und einen Druck im Bereich von 100 bar bis 350 bar durchgeführt, bevorzugter bei einer Temperatur im Bereich 40 °C bis 70 °C und einen Druck im Bereich von 200 bar bis 300 bar durchgeführt, noch bevorzugter bei einer Temperatur im Bereich 40 °C bis 50 °C und einen Druck im Bereich von 250 bar bis 260 bar, ganz besonders bevorzugt bei 260 bar und 50 °C durchgeführt.

Die Extraktion der zerkleinerten Bohnen kann mit dem Fachmann bekannten Methoden durchgeführt werden. Beispielsweise beschreiben die EP 0 154 258 B1, die EP 0 200 150, die DE 34 15 844 A1 und die EP 1 815 899 A1 entsprechende Vorrichtungen zur Extraktion unter Verwendung von überkritischem CO₂.

Die Menge an im Schritt a. des erfindungsgemäßen Verfahrens eingesetzten überkritischen CO₂ ist dabei nicht besonders beschränkt. Das Verhältnis des Gesamtgewichts an im Schritt (c) des erfindungsgemäßen Verfahrens eingesetzten überkritischen CO₂ bezogen auf das Gesamtgewicht der im Schritt (c) eingesetzten zerkleinerten Bohnen liegt insbesondere im Bereich 1 : 1 bis 100 : 1, bevorzugt im Bereich 8 : 1 bis 60 : 1, bevorzugter im Bereich 20: 1 bis 45 : 1.

Es wurde überraschend festgestellt, dass durch den Schritt (a) des erfindungsgemäßen Verfahrens, also der genauen Einstellung des Wassergehalts der Bohnen auf den Wert von 15.0 bis 17.5 Gew.-%, eine optimale Entfernung von unerwünschten, bohnenartig schmeckenden Begleitstoffen möglich ist. Unterhalb des Wassergehalts von 15.0 Gew.-% verläuft die Entfernung dieser Begleitstoffe unvollständig. Oberhalb von 17.5 Gew.-% Wassergehalt werden die Bohnen so breiig, dass eine gute Zerkleinerung in separate Partikel nicht gewährleistet werden kann.

Das erfindungsgemäße Verfahren kann kontinuierlich oder im Batchbetrieb, bevorzugt jedoch kontinuierlich, durchgeführt werden.

Die folgenden Beispiele sollen die Erfindung erläutern, ohne diese auf diese Beispiele zu beschränken.

### Beispiel

Sojabohnen mit 7 Gew.% Wassergehalt werden mit Wasserdampf 10 min behandelt, dabei steigt der Wassergehalt auf 17.0 Gew.-% angegebenen Wert.

Nach dem anschließenden Abkühlen werden die feuchten Sojabohnen auf eine Größe von 0.3 mm flockiert. Die feuchten Flocken werden in den Autoklaven gefüllt und verschlossen. Mittels einer Hochdruckpumpe wird der Autoklav nun auf 260 bar/ 50 °C aufgedrückt und von unten nach oben im Kreislauf mit überkritischem CO₂ extrahiert. Zum Entölen und Entbittern für 1 kg feuchter Sojaflocken benötigt man 80 kg CO₂. Während des Kreislauffahrens werden das extrahierte Öl und das Wasser im Abscheider aufgefangen. Nach dem Ende der Extraktion wird der Autoklav entspannt und das Produkt entnommen. Der Feuchtegehalt liegt nun wieder bei 7 Gew.-%, analog dem Ausgangsmaterial. Öl und Wasser werden aus dem Abscheider gemeinsam abgelassen. Nach der Phasentrennung wird das Öl vom Wasser abgetrennt.

Bei der Verkostung des erhaltenen extrahierten Materials wird kein bohnenartiger Geschmack festgestellt. Die gleiche Beobachtung (kein bohnenartiger Geschmack) kann gemacht werden, wenn anstatt auf 17.0 Gew.-% auf einen Wassergehalt im Bereich 15.0 Gew.-% bis 17.5 Gew.-% eingestellt würde. Oberhalb eines Wassergehalts von 17.5 Gew.-% wäre eine Zerkleinerung der Sojabohnen zu Partikeln dann nicht mehr möglich. Unterhalb von 15.0 Gew.-% verbliebe ein wahrnehmbarer bohnenartiger Geschmack im Extraktionsrückstand.

Die Versuche zeigen, dass es überraschend möglich ist, im erfindungsgemäßen Verfahren, durch Einstellung eines bestimmten Wassergehaltes vor Zerkleinerung und Extraktion der Sojabohnen mit überkritischem CO₂, die unerwünschten Geschmacksstoffe und Öle besonders effizient zu entfernen.

## Patentansprüche

1. Verfahren zur Extraktion von Bohnen mit überkritischem CO₂, welches **dadurch**
**gekennzeichnet ist, dass**
(a) unzerkleinerte Bohnen mit einem Wassergehalt von unter 15.0 Gew.-% so lange mit Wasserdampf behandelt werden, bis deren Wassergehalt in einem Bereich zwischen 15.0 und 17.5 Gew.-% liegt;
(b) die in Schritt (a) behandelten Bohnen zerkleinert werden;
(c) die in Schritt (b) zerkleinerten Bohnen mit überkritischem CO₂ extrahiert werden.

2. Verfahren nach Anspruch 1, **dadurch gekennzeichnet, dass** die Bohnen Sojabohnen sind.

3. Verfahren nach Anspruch 1 oder 2, **dadurch gekennzeichnet, dass** das überkritische CO₂ eine Temperatur im Bereich von 31 °C bis < 100 °C und einen Druck im Bereich von 74 bar bis 400 bar aufweist.

4. Verfahren nach einem der Ansprüche 1 bis 3, **dadurch gekennzeichnet, dass** der Wasserdampf eine Temperatur von über 100 °C aufweist.

5. Verfahren nach einem der Ansprüche 1 bis 4, **dadurch gekennzeichnet, dass** nach der Zerkleinerung im Schritt (b) die Bohnen als Partikel vorliegen und mindestens 50 % der erhaltenen Partikel eine Dicke von ≤ 1 cm aufweisen und mindestens 50 % der erhaltenen Partikel eine Länge von 0.5 mm bis 5 cm aufweisen.
